(19) **Europäisches Patentamt / European Patent Office / Office européen des brevets**

(11) **EP 4 260 616 B1**

(12) **EUROPEAN PATENT SPECIFICATION**

(45) Date of publication and mention
of the grant of the patent:
**31.12.2025 Bulletin 2026/01**

(51) International Patent Classification (IPC):
**H04W 56/00** (2009.01)

(21) Application number: **21815985.3**

(52) Cooperative Patent Classification (CPC):
**H04W 56/0065; H04J 3/0667; H04W 56/003**

(22) Date of filing: **18.11.2021**

(86) International application number:
**PCT/EP2021/082083**

(87) International publication number:
**WO 2022/122333 (16.06.2022 Gazette 2022/24)**

(54) **ASYMMETRIC PROPAGATION DELAY DETECTION AND RESPONSE FOR WIRELESS NETWORKS**

ASYMMETRISCHE AUSBREITUNGSVERZÖGERUNGSDETEKTION UND REAKTION FÜR DRAHTLOSE NETZWERKE

DÉTECTION DE RETARD DE PROPAGATION ASYMÉTRIQUE ET RÉPONSE POUR DES RÉSEAUX SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2020 US 202063199184 P**

(43) Date of publication of application:
**18.10.2023 Bulletin 2023/42**

(73) Proprietor: **Nokia Technologies Oy
02610 Espoo (FI)**

(72) Inventors:
• **JACOBSEN, Thomas Haaning
9400 Nørresundby (DK)**
• **KOLDING, Troels
9270 Klarup (DK)**
• **KEATING, Ryan
Chicago, Illinois 60622 (US)**
• **SÄILY, Mikko
07150 Laukkoski (FI)**

(74) Representative: **Script Intellectual Property LLP
Suite J, Anchor House
School Close
Chandlers Ford
Eastleigh, Hampshire SO53 4DY (GB)**

(56) References cited:
EP-A1- 1 802 014          EP-A1- 3 491 753
EP-B1- 3 491 753          WO-A1-2013/170910
US-A1- 2015 104 167      US-A1- 2018 076 949

**Description**

TECHNICAL FIELD

This description relates to wireless communications.

BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3rd Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations or access points (APs), which are referred to as enhanced Node AP (eNBs), provide wireless access within a coverage area or cell. In LTE, mobile devices, or mobile stations are referred to as user equipments (UEs). LTE has included a number of improvements or developments. Aspects of LTE are also continuing to improve.

5G New Radio (NR) development is part of a continued mobile broadband evolution process to meet the requirements of 5G, similar to earlier evolution of 3G & 4G wireless networks. In addition, 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT) and may offer new types of mission-critical services. For example, ultra-reliable and low-latency communications (URLLC) devices may require high reliability and very low latency.

EP1802014A1 describes techniques for correcting time synchronization inaccuracy caused by asymmetric delays on a communication link. The time synchronization method described comprises determining an asymmetry in a propagation delay on a communication link used by a first device and a second device to exchange timing information and incorporating the asymmetry into a determination of a clock offset between the first and second devices.

SUMMARY

The invention is defined by the appended claims.

The details of one or more examples of embodiments are set forth in the accompanying drawings and the description below. Other features will be apparent from the description and drawings, and from the claims.

BRIEF DESCRIPTION OF THE DRAWINGS

FIG. 1 is a block diagram of a wireless network according to an example.

FIG. 2 is a flow chat illustrating operation of a user device (e.g., UE) according to an example embodiment.

FIG. 3 is a flow chart illustrating operation of a user device (e.g., UE) according to an example embodiment.

FIG. 4 is a diagram illustrating an operation of a propagation delay asymmetry detection procedure according to an example embodiment.

FIG. 5 is a diagram illustrating operation A) (initiating PD asymmetry test) and B) (configuration) of FIG. 4 according to an example embodiment.

FIG. 6 is a diagram illustrating operation C) of FIG. 4, including Time Difference of Arrival (TDoA) measurements and receive-transmit (Rx-Tx) time difference measurements according to an example embodiment.

FIG. 7 is a diagram illustrating operations D) and E) of FIG. 4, including measurement collection and propagation delay (PD) asymmetry metric calculation in which the UE/user device calculates and forwards the PD asymmetry metric according to an example embodiment.

FIG. 8 is a diagram illustrating operations D) and E) of FIG. 4, including measurement collection and propagation delay (PD) asymmetry metric calculation in which the control entity calculates the PD asymmetry metric according to an example embodiment.

FIG. 9 is a diagram illustrating technique for detecting of one or more wireless links as being asymmetric, among a group of wireless links for a UE, according to an arrangement .

FIG. 10 is a block diagram of a wireless station or node (e.g., AP, BS, RAN node, DU, user device, UE, network node or other node).

DETAILED DESCRIPTION

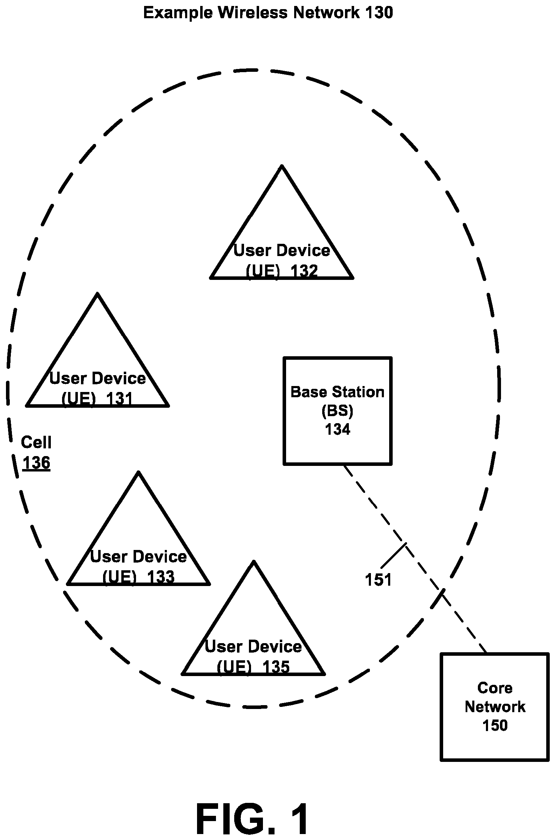

FIG. 1 is a block diagram of a wireless network 130 according to an example. In the wireless network 130 of FIG. 1, user devices 131, 132, 133 and 135, which may also be referred to as mobile stations (MSs) or user equipment (UEs), may be connected (and in communication) with a base station (BS) 134, which may also be referred to as an access point (AP), an enhanced Node B (eNB), a gNB or a network node. The terms user device and user equipment (UE) may be used interchangeably. A BS may also include or may be referred to as a RAN (radio access network) node, and may include a portion of a BS or a portion of a RAN node (e.g., such as a centralized unit (CU) and/or a distributed unit (DU) in the case of a split BS or split gNB). At least part of the functionalities of a BS (e.g., access point (AP), base station (BS) or (e)Node B (eNB), gNB, RAN node) may also be carried out by any node, server or host which may be operably coupled to a transceiver, such as a remote radio head. BS (or AP) 134 provides wireless coverage within a cell 136, including to user devices (or UEs) 131, 132, 133 and 135. Although only four user devices (or UEs) are shown as being connected or attached to BS 134, any number of user devices may be provided. BS 134 is also connected to a core network 150 via a S1 interface 151. This is merely one simple example of a wireless network, and others may be used.

A base station (e.g., such as BS 134) is an example of a radio access network (RAN) node within a wireless network. A BS (or a RAN node) may be or may include (or may alternatively be referred to as), e.g., an access point (AP), a gNB, an eNB, or portion thereof (such as a /centralized unit (CU) and/or a distributed unit (DU) in the case of a split BS or split gNB), or other network node.

According to an illustrative example, a BS node (e.g., BS, eNB, gNB, CU/DU, ...) or a radio access network (RAN) may be part of a mobile telecommunication system. A RAN (radio access network) may include one or more BSs or RAN nodes that implement a radio access technology, e.g., to allow one or more UEs to have access to a network or core network. Thus, for example, the RAN (RAN nodes, such as BSs or gNBs) may reside between one or more user devices or UEs and a core network. According to an example embodiment, each RAN node (e.g., BS, eNB, gNB, CU/DU, ...) or BS may provide one or more wireless communication services for one or more UEs or user devices, e.g., to allow the UEs to have wireless access to a network, via the RAN node. Each RAN node or BS may perform or provide wireless communication services, e.g., such as allowing UEs or user devices to establish a wireless connection to the RAN node, and sending data to and/or receiving data from one or more of the UEs. For example, after establishing a connection to a UE, a RAN node or network node (e.g., BS, eNB, gNB, CU/DU, ...) may forward data to the UE that is received from a network or the core network, and/or forward data received from the UE to the network or core network. RAN nodes or network nodes (e.g., BS, eNB, gNB, CU/DU, ...) may perform a wide variety of other wireless functions or services, e.g., such as broadcasting control information (e.g., such as system information or on-demand system information) to UEs, paging UEs when there is data to be delivered to the UE, assisting in handover of a UE between cells, scheduling of resources for uplink data transmission from the UE(s) and downlink data transmission to UE(s), sending control information to configure one or more UEs, and the like. These are a few examples of one or more functions that a RAN node or BS may perform.

A user device (user terminal, user equipment (UE), mobile terminal, handheld wireless device, etc.) may refer to a portable computing device that includes wireless mobile communication devices operating either with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, a vehicle, a sensor, and a multimedia device, as examples, or any other wireless device. It should be appreciated that a user device may also be (or may include) a nearly exclusive uplink only device, of which an example is a camera or video camera loading images or video clips to a network.

In LTE (as an illustrative example), core network 150 may be referred to as Evolved Packet Core (EPC), which may include a mobility management entity (MME) which may handle or assist with mobility/handover of user devices between BSs, one or more gateways that may forward data and control signals between the BSs and packet data networks or the Internet, and other control functions or blocks. Other types of wireless networks, such as 5G (which may be referred to as New Radio (NR)) may also include a core network.

In addition, the techniques described herein may be applied to various types of user devices or data service types, or may apply to user devices that may have multiple applications running thereon that may be of different data service types. New Radio (5G) development may support a number of different applications or a number of different data service types, such as for example: machine type communications (MTC), enhanced machine type communication (eMTC), Internet of Things (IoT), and/or narrowband IoT user devices, enhanced mobile broadband (eMBB), and ultra-reliable and low-latency communications (URLLC). Many of these new 5G (NR) - related applications may require generally higher performance than previous wireless networks.

IoT may refer to an ever-growing group of objects that may have Internet or network connectivity, so that these objects may send information to and receive information from other network devices. For example, many sensor type applications or devices may monitor a physical condition or a status, and may send a report to a server or other network device, e.g., when an event occurs. Machine Type Communications (MTC, or Machine to Machine communications) may, for example, be characterized by fully automatic data generation, exchange, processing and actuation among intelligent machines, with or without intervention of humans. Enhanced mobile broadband (eMBB) may support much higher data rates than currently available in LTE.

Ultra-reliable and low-latency communications (URLLC) is a new data service type, or new usage scenario, which may be supported for New Radio (5G) systems. This enables emerging new applications and services, such as industrial automations, autonomous driving, vehicular safety, e-health services, and so on. 3GPP targets in providing connectivity with reliability corresponding to block error rate (BLER) of $10^{-5}$ and up to 1 ms U-Plane (user/data plane) latency, by way of illustrative example. Thus, for example, URLLC user devices/UEs may require a significantly lower block error rate than other types of user devices/UEs as well as low latency (with or without requirement for simultaneous high reliability). Thus, for example, a URLLC UE (or URLLC application on a UE) may require much shorter latency, as compared to an eMBB UE (or an eMBB application running on a UE).

The techniques described herein may be applied to a wide variety of wireless technologies or wireless networks, such as LTE, LTE-A, 5G (New Radio (NR)), cmWave, and/or mmWave band networks, IoT, MTC, eMTC, eMBB, URLLC, etc., or any other wireless network or wireless technology. These example networks, technologies or data service types are provided only as illustrative examples.

Time synchronization between a network node (e.g., gNB, BS, DU, CU) may be useful, and even required in some cases, for a variety of applications, such as for UE positioning and some time-sensitive uses or applications.

In some cases, a UE positioning function may be used to determine a geographic position of a UE. In some cases, UE positioning may be performed or determined based on positioning reference signals (PRSs). For example, a positioning reference signal (PRS) may be a reference signal that may be transmitted to allow a UE position to be determined or estimated. In some cases, a UE position may be determined, for example, based on a measured timing and/or measured received power of one or more PRSs, for example. For example, PRSs may be or may include PRS sequences that may be pseudo-random sequences that have good (or relatively high) auto-correlation properties and small (or relatively low) cross-correlation properties, e.g., to allow timing or time differences of two signals to be determined. PRS signals may include either downlink (DL) PRS signals (transmitted by a gNB or other network node to a UE), or uplink (UL) PRS signals (transmitted by a UE to a gNB or network node). Other reference signals may be used as well.

Some example UE positioning functions may include Time Difference of Arrival (TDOA), such as downlink-TDOA (DL-TDOA), DL (downlink) Angle of Departure (DL-AoD), multi-round trip time (multi-RTT) positioning, uplink-TDOA (UL-TDOA), uplink-AOA (UL-AOA), or other techniques. As an example Time Difference of Arrival (TDOA) positioning technique, a UE may determine a reference signal time difference (e.g., between a received DL PRS, and a reference PRS stored by the UE), and may also possibly determine a reference signal received power of a received DL PRS. The UE may report these signal measurements to a network node (e.g., to a gNB, BS, or other network node), as part of a positioning procedure. A control entity or positioning entity within the network (e.g., a positioning entity within a core network, in the cloud, on a gNB or BS, or other node or location, such as a location management function (LMF)) may determine a UE position based on the received signal measurements or parameters. The control entity or positioning entity, e.g., LMF, may determine or estimate a geographic position of the UE based on these received measurements from one or more gNBs.

In addition, UEs may receive time synchronization information, such as a Time of Day (ToD) indication from a network node (e.g., gNB, BS, CU/DU). Accurate time synchronization may be useful within wireless networks, and may even be required for some types of 3GPP 5G New Radio applications, e.g., such as to support Industrial IoT use-cases (IIoT) and/or Time Sensitive Networking (TSN) or Time Sensitive Communications (TSC) applications, as some illustrative examples. For example, a number of operations or tasks within Industrial IoT may need to occur at very specific and accurate times. Time synchronization may ensure that different nodes of a 5G network (e.g., user plane function (UPF), gNB, UE) share the same Time of Day (ToD) clock, such as the same UTC (Coordinated Universal Time) clock.

However, due to the dynamic nature of a radio link, it may be challenging for a network node (e.g., BS, gNB or DU) to deliver time synchronization (e.g., such as a ToD) over a gNB-UE wireless link to a UE. For example, using the 5G NR control plane, time synchronization information (e.g., gNB clock, or gNB ToD) may be delivered from a gNB to served UEs using multiple methods, such as for example: In a first example method, the time or time synchronization (e.g., ToD) information is encoded in a SIB9 (system information block (SIB) 9) message that is broadcast by the gNB to UEs. In another example method, the time or time synchronization information may be encoded in a unicast RRC (radio resource control) message that is transmitted to the UE. In both methods, the encoded time or time synchronization information may be the gNB's clock time that may, for example, correspond to an starting or ending boundary of a specific radio system frame (such as a time or time stamp that corresponds to an ending boundary a reference system frame number (refSFN)), where refSFN is either known by the UE or indicated to the UE either implicitly (in case of broadcast) or explicitly (in case of unicast). When a UE receives the SIB9/RRC message with the gNB time or time synchronization information (e.g., the time or time stamp corresponding to an ending boundary of refSFN), the UE associates the time information with its own refSFN boundary, which is aligned with the gNB's refSFN boundary. In this way, underlying 5G radio frame timing at gNB and UE may be used as a common reference for delivery of time synchronization information (e.g., ToD clock) from a gNB to a UE. Thus, for example, a time synchronization or ToD may be indicated by a gNB by (or based on) a time (e.g., time stamp) corresponding to a reference system frame number boundary (e.g., which may be indicated by a time stamp of an ending boundary of the reference system frame, and the frame number identifying the reference system frame). This is an example of a technique that may be used by a gNB to provide time or time synchronization information to UEs, and other techniques may be used.

A challenge in using the underlying 5G radio frame timing at gNB and UE as a common reference for delivery of for time synchronization or ToD clock is that radio frame boundaries (such as refSFN boundaries) at gNB and UE are not perfectly aligned in time with respect to one another. Even if the UE synchronizes its receiver to the primary synchronization signals/secondary synchronization signals (PSS/SSS) received by UE from the gNB, the downlink frame boundary at the UE is shifted by the downlink (DL) propagation delay (the time it takes for the radio frame to propagate in DL direction from gNB to UE via the gNB-UE wireless link) with respect to the corresponding frame boundary at gNB. Thus, the ending boundary of refSFN at UE will typically be shifted or offset (with respect to the ending boundary of refSFN at gNB) by the downlink propagation delay (DL PD) from gNB to UE. When a UE synchronizes its clock by associating time information (e.g., time stamp) carried or provided by SIB9/RRC message with its own refSFN boundary, UE's clock will be delayed by propagation delay compared to gNB's clock. To compensate for this timing difference at the UE, the UE may add the DL PD to this time stamp (or NW/gNB may alternatively pre-adjust or preconfigure the time stamp to account for the UE DL PD). This may not be an issue in wired data communications and/or if propagation delay is relatively small compared to the maximum allowed timing error (every 10 m of distance may add 33.3 ns of time error between UE and gNB clocks due to propagation delay). However, some 5G/NR applications may require very accurate time synchronization between gNB and UEs. For example, some 5G/NR applications may require a maximum synchronization error (e.g., between gNB and UE) less than 900 ns in Rel (release) -17 and possibly down to 500 ns in Rel-18. As noted, in some cases, a DL PD from gNB to UE may introduce a much larger error.

According to some arrangements, in some cases, acquisition of a PD (propagation delay) estimation may use (or may be based on) a round trip time (RTT) measurement. This can either be obtained through the positioning framework (multi-RTT measurements) or through the UE timing advance (TA) (where RTT may be estimated as the TA). A gNB may provide a UE with a UE TA (timing advance) via RACH/random access procedure msg 2, and gNB can send updated TA to UE via MAC control element (CE). A RTT measurement may be or may include a measure of the sum of propagation delay in DL (DL PD from gNB to UE) and the propagation delay in UL (UL PD from UE to gNB). Also, in some cases, DL PD may be estimated as RTT/2 (assuming there is PD symmetry for DL PD and UL PD of a UE-gNB wireless link). However, problems may arise if RTT/2 is not an accurate estimate of the DL PD, e.g., due to propagation delay (PD) asymmetry. Propagation delay asymmetry (PD asymmetry) may refer to or may include a case or situation where a difference between the UL PD and a DL PD for a UE-gNB wireless link are not equal or are not within a threshold value (meaning that the UL PD and DL PD are not symmetrical, or not substantially equal within an allowed threshold or allowed variation). However, in most cases, PD asymmetry cannot be easily detected as only the sum (DL PD + UL PD) is typically known or detectable by a UE or network node (e.g., gNB, DU, CU).

Time synchronization mechanisms and some positioning mechanisms may assume that there is a strict symmetry between UL PD and DL PD (where UL PD is the same as or equal to the DL PD, within a small threshold or allowable error), for a particular UE-gNB wireless link. However, there may be a number of cases when this PD symmetry condition is not fulfilled, e.g., such as cases including UL/DL beam non-correspondence, DL/UL synchronization procedure, different LOS (line of sight) vs. NLOS in DL and UL propagation, propagation environments with strong reflections such as Fjords, etc. Thus, for example, in the case where there is PD asymmetry for a UE-gNB wireless link, this may result in significant errors in timing and/or positioning for the UE (e.g., since RTT/2 does not reflect the actual DL PD, due to PD asymmetry). For example, in the case where there is or may be PD asymmetry, if the UE uses RTT/2 as the DL PD estimate, and then adjusts the time stamp for refSFN by RTT/2 (to account for the DL PD), this will (or may) cause erroneous time synchronization at the UE (e.g., since the RTT/2 does not (or may not) provide an accurate estimate of DL PD, due to the PD asymmetry).

Also, in some arrangements , a wireless link (e.g., UE-gNB link) may also include a set of beams (transmit beam, receive beam) used by the UE and/or gNB to transmit information and/or receive information from the other node of the wireless link. Thus, for example, while a best beam pair for downlink communications for the link (e.g., a DL transmit beam of the gNB and a DL receive beam of the UE) may be selected, for example, based on a highest measured reference signal received power (RSRP) of a received reference signal (e.g., and thus such beam(s) may be selected to provide a highest data rate and/or lowest error rate, of various possible beams that may be used for the link), this same beam pair selected based on RSRP may, at least in some cases, result in a PD asymmetry for the UE-gNB wireless link (and thus possibly causing significant errors in time synchronization and/or positioning for the UE).

A Rel-16 work item was conducted in 3GPP to introduce native positioning support in New Radio (NR). As the result of that work, Downlink Time Difference of Arrival (DL-TDOA) and multi-cell Round Trip Time (multi-RTT) were specified as positioning techniques. In the DL a new positioning reference signal (PRS) was introduced, and in the UL a new SRS for positioning (SRS-P) was introduced. For example, in network based DL-TDOA, the UE may measure reference signal time difference (RSTD) based on the DL-PRS and reports to a location management function (LMF). In an example multi-RTT measurement, the UE measures the DL-PRS and transmits the SRS-P. The UE and gNBs each measure receive-transmit (Rx-Tx) Rx-Tx time difference measurements and report them to the LMF, which may then compute an estimate of the RTT for one or more UE-gNB wireless links. As used herein, multi-RTT measurements may include a combination of UE Rx-Tx and gNB Rx-Tx measurements. However, a PD asymmetry for a UE-gNB wireless link may cause the PD estimate to be in error, and thus cause significant errors in timing-sensitive applications such as UE time synchronization, UE positioning, etc.

Thus, it may be desirable to have a mechanism(s) that can be used to detect a PD asymmetry for a wireless link, and then respond, or take one or more steps or actions in response to detecting the (e.g., possible) PD asymmetry to improve UE operation.

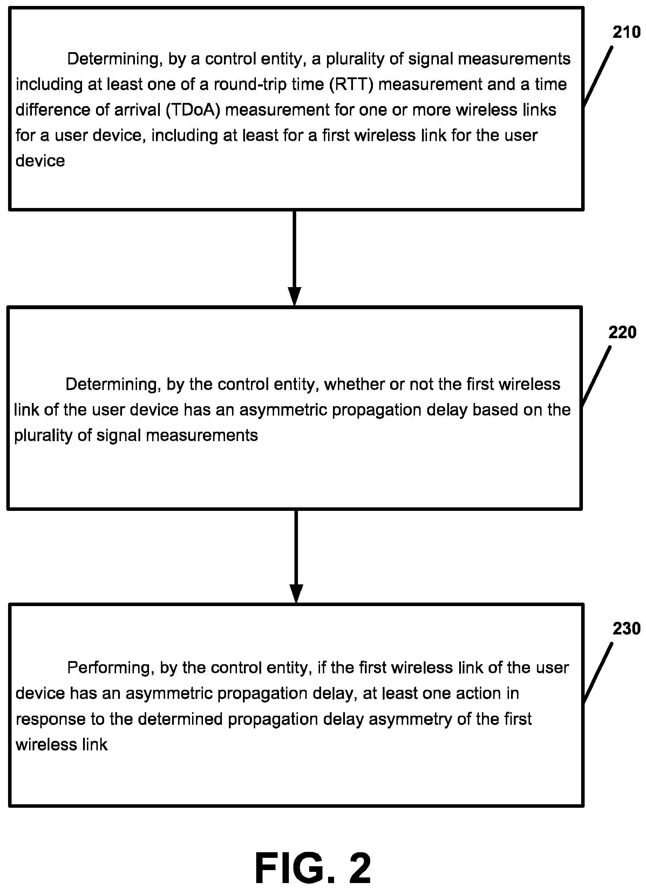

FIG. 2 is a flow chart illustrating operation of a control entity (e.g., LMF, gNB, core network node, or other entity) according to anarrangement. Operation 210 includes determining, by a control entity (e.g., a location management function (LMF) or positioning entity, an entity or node that may be involved in or responsible for detecting a PD asymmetry of a UE-gNB wireless link(s), a network node such as a gNB, a CU or DU, or other node or entity), a plurality of signal measurements including at least one of a round-trip time (RTT) measurement and a time difference of arrival (TDoA) measurement for one or more wireless links for a user device, including at least for a first wireless link for the user device. In operation 210, it may be desirable to determine if there may be a propagation delay (PD) asymmetry for the first wireless link. As noted above, if there may be a PD asymmetry for the first wireless link for the user device (e.g., UE), this may indicate that time synchronization or ToD from the network node (e.g., gNB, DU) may be unreliable (e.g., since RTT/2 or other DL PD estimate may not provide an accurate estimate of DL PD of this first wireless link). A round trip time (RTT) measurement may, for example, be provided or measured based on a timing advance (TA) provided by a network node (e.g., gNB or DU), where the RTT may be estimated based on TA = RTT. The RTT may alternatively be measured or provided based on a plurality of receive-transmit (Rx-Tx) time difference measurements. The user device (e.g., UE) and/or the network node (e.g., gNB, DU, BS) may measure a receive transmit (Rx-Tx) time difference measurement.

A round-trip time (RTT) may be or may include a sum of uplink propagation delay (UL PD) and a downlink propagation delay (DL PD) for a UE-gNB wireless link. For example, a round trip time (RTT) measurement may be determined or calculated as a difference between two receive-transmit (Rx-Tx) time difference measurements for a wireless link (e.g., for a UE-gNB wireless link). For example, $RTT_{UE-gNB0}$ (round trip time for wireless link between UE and gNB0) may be determined as:

$$RTT_{UE\text{-}gNB0} = (Rx\text{-}Tx)_{UE} - (Rx\text{-}Tx)_{gNB0},$$

R

   where $(Rx\text{-}Tx)_{UE}$ is the receive-transmit (Rx-Tx) time difference measurement for the UE-gNBO wireless link as measured by the UE, and
   where $(Rx\text{-}Tx)_{gNB0}$ is the receive-transmit (Rx-Tx) time difference measurement for the UE-gNBO wireless link as measured by the gNBO.

The UE may have one or more wireless links, such as a wireless link to gNBO (UE-gNBO wireless link), a wireless link to gNB1 (UE-gNB 1 wireless link), etc.

Thus, with respect to the wireless link between UE and gNB1, a $RTT_{UE-gNB1}$ (round trip time for wireless link between UE and gNB 1) may be determined as:

$$RTT_{UE\text{-}gNB1} = (Rx\text{-}Tx)_{UE} - (Rx\text{-}Tx)_{gNB1},$$

   where $(Rx\text{-}Tx)_{UE}$ is the receive-transmit (Rx-Tx) time difference measurement for the UE-gNB 1 wireless link as measured by the UE, and
   where $(Rx\text{-}Tx)_{gNB1}$ is the receive-transmit (Rx-Tx) time difference measurement for the UE-gNB 1 wireless link as measured by the gNB 1.

Other techniques may also be used to measure or determine a RTT for a wireless link.

In general, a Time Difference of Arrival (TDOA) may be or may include a time interval between an arrival of two signals. For example, a TDOA may be or may include a time interval that may be observed (e.g., determined, measured, detected) by a UE between a reception by the UE of downlink signals via two different wireless links (e.g., signals received from two different network nodes/gNBs or from two different cells). Thus, for example, two network nodes (e.g., gNB0, gNB1) or cells may be synchronized, such that the network nodes (gNBO, gNB1) may transmit a reference signal (e.g., a positioning reference signal (PRS), a synchronization signaling block (SSB), a channel-state information-reference signal (CSI-RS), or other reference signal) at (approximately, within some error or threshold time period) the same time. The reference signal from gNBO may be received by the UE at time t0, and the reference signal from gNB1 may be received at time t1. Thus, in this illustrative example, the UE may measure a TDOA, with respect to the UE-gNBO wireless link and the UE-gNB 1 wireless link, as the time interval t1-t0.

Furthermore, with reference to FIG. 2, operation 220 includes determining, by the control entity, whether or not the first wireless link of the user device has an asymmetric propagation delay based on the plurality of signal measurements. This operation may include determining whether an estimate of PD asymmetry is greater than a threshold. For example, a PD asymmetry metric may be determined, and then compared to a threshold. For example, PD asymmetry may be determined (or detected) if the PD asymmetry metric is greater than the threshold. Other techniques may be used (e.g., by the control entity) to determine if there is PD asymmetry for the first wireless link for the user device.

For example, the PD asymmetry metric may indicate a possible asymmetry between an uplink propagation delay and a downlink propagation delay for a particular wireless link (e.g., for a first wireless link) of the user device or UE (e.g., if the PD asymmetry metric is greater than a threshold). Also, in some cases, the PD asymmetry metric may indicate a relative amount PD asymmetry of the first wireless link, relative to an amount of PD asymmetry of another (e.g., a second) wireless link.

And, with respect to FIG. 2, operation 230 includes performing, by the control entity, if the first wireless link of the user device has an asymmetric propagation delay, at least one action in response to the determined propagation delay asymmetry of the first wireless link. A variety of different operations may be performed in response to determining that a PD asymmetry exists (or may exist) for the first wireless link.

With respect to operation 220 of FIG. 2, the determining whether the first wireless link of the user device (e.g., UE) has an asymmetric propagation delay or not may include: determining, based on the plurality of signal measurements, a propagation delay asymmetry metric that estimates an amount of asymmetry between an uplink propagation delay and a downlink propagation delay for the first wireless link of the user device; determining a propagation delay (PD) asymmetry threshold; comparing the propagation delay asymmetry metric to the propagation delay asymmetry threshold; determining whether or not the first wireless link of the user device has an asymmetric propagation delay or not, based on the comparing. PD asymmetry may be determined based on signal measurements (e.g., RTT and TDOA measurements) performed for at least two wireless links for the user device or UE, including for a first wireless link and a second wireless link for the user device (or UE). For example, TDOA and RTT measurements may be performed or measured with respect to a first wireless link between a UE and a gNBO (UE-gNBO wireless link), and a second wireless link between the UE and a gNB1 (UE-gNB 1 wireless link), e.g., in order to determine if a PD asymmetry may exist for the first wireless link for the UE (e.g., for the UE-gNBO wireless link).

For example, the control entity may determine a PD asymmetry metric (A) based on the following:

$$A = 2*TDoA - (RTT_{UE\text{-}gNB1} - RTT_{UE\text{-}gNB0}) \quad (Eqn.\ 1)$$

Where, TDoA may be or may include a time interval that may be observed (e.g., determined, measured, detected) by a UE between a reception by the UE of downlink signals via two different wireless links (e.g., signals received from two different network nodes/gNBs or from two different cells). Thus, as noted above, two network nodes (e.g., gNB0, gNB1) or cells may be synchronized, such that the network nodes (gNBO, gNB1) may transmit a reference signal (e.g., a positioning reference signal (PRS), a synchronization signaling block (SSB), a channel-state information-reference signal (CSI-RS), or other reference signal) at (approximately, within some error or threshold time period) the same time. The reference signal from gNBO may be received by the UE at time t0, and the reference signal from gNB1 may be received at time t1. Thus, in this illustrative example, the UE may measure a TDOA, with respect to the UE-gNBO wireless link and the UE-gNB 1 wireless link, as the time interval t1-t0.

And, where $RTT_{UE\text{-}gNB0} = (Rx\text{-}Tx)_{UE} - (Rx\text{-}Tx)_{gNB0}$,

where $(Rx\text{-}Tx)_{UE}$ is the receive-transmit (Rx-Tx) time difference measurement for the UE-gNBO wireless link as measured by the UE, and
where $(Rx\text{-}Tx)_{gNB0}$ is the receive-transmit (Rx-Tx) time difference measurement for the UE-gNBO wireless link as measured by the gNBO.

And, where $RTT_{UE\text{-}gNB1} = (Rx\text{-}Tx)_{UE} - (Rx\text{-}Tx)_{gNB1}$,

where $(Rx-Tx)_{UE}$ is the receive-transmit (Rx-Tx) time difference measurement for the UE-gNB 1 wireless link as measured by the UE, and

where $(Rx-Tx)_{gnB1}$ is the receive-transmit (Rx-Tx) time difference measurement for the UE-gNB 1 wireless link as measured by the gNB 1.

The UE may send the following measurements to control entity (e.g., LMF or other control entity): the TDOA measured by UE for signals received from gNB0 and gNB1, the receive-transmit (Rx-Tx) time difference measurement measured by UE for the UE-gNB0 wireless link, and the receive-transmit (Rx-Tx) time difference measurement measured by UE for the UE-gNB1 wireless link. gNB0 may send to the control entity the $(Rx-Tx)_{gNB0}$, which is the receive-transmit (Rx-Tx) time difference measurement for the UE-gNB0 wireless link as measured by the gNB0. Likewise, gNB1 may send to the control entity (e.g., LMF, or other control entity or node) the $(Rx-Tx)_{gNB0}$, which is the receive-transmit (Rx-Tx) time difference measurement for the UE-gNB 1 wireless link as measured by the gNB1. The control entity may determine the PD asymmetry metric (A) based on Eqn. 1, based on the signal measurements received from the UE, gNB0 and gNB1. RTT may be determined based on the received signals measurements. Then, PD asymmetry metric (A) may be determined by the control entity based on Eqn. 1. The control entity may compare the PD asymmetry metric (A) to a PD asymmetry threshold (T). For example, the control entity may determine that there is PD asymmetry for the first wireless link (e.g., for the UE-gNB0 wireless link) if the PD asymmetry metric (A) is greater than PD asymmetry threshold (T). And, the control entity may determine that there is no PD asymmetry for the first wireless link if the PD asymmetry metric (A) is less than or equal to the PD asymmetry threshold. This is merely an illustrative example of a technique that may be used to determine or estimate whether or not there may be PD asymmetry for a wireless link.

The method of FIG. 2 may further include sending, by the control entity to the user device and/or a plurality of network nodes, a measurement configuration that provides a configuration to perform at least one signal measurement of the plurality of signal measurements; and wherein the determining, by the control entity, a plurality of signal measurements comprises receiving, by the control entity, the plurality of signal measurements from the user device and the plurality of network nodes. For example, the control entity may send a measurement configuration to the UE and/or gNB0, gNB1 that indicates that Rx-TX measurements, and/or TDOA measurements should be performed by the UE and/or gnB0, gNB1, as described above, and reported to the control entity. For example, the control entity, may indicate to UE the pair of wireless links (indicating two or more cells, or two or more links, such as links from UE to gNB0 and gNB1) for which the UE should perform TDOA measurement, and Rx-Tx measurements, and then report such measurements to the control entity. Likewise. the control entity may indicate or instruct gNB0 and gNB1 to send reference signals to UE (e.g., for TDOA and/or Rx-TX measurement), and then the gNB0 and gNB1 should measure Rx-Tx for the respective wireless links to the UE, and report these Rx-TX measurements to the control entity.

According to an example embodiment of the method of FIG. 2, the round-trip time (RTT) measurement may include or may be based on, at least one of:
a timing advance for a wireless link; or a round trip time (RTT) measurement based on a plurality of receive-transmit (Rx-Tx) measurements.

According to one arrangement of the method of FIG. 2, the determining a plurality of signal measurements may include the following: receiving, by the control entity from the user device, a time difference of arrival (TDoA) measurement, based on a signal received by the user device from the first network node via the first wireless link, and a signal received by the user device from the second network node via a second wireless link; receiving, by the control entity from the user device, a user device-measured receive-transmit (Rx-Tx) time difference measurement for the first wireless link, and a user device-measured receive-transmit (Rx-Tx) time difference measurement for the second wireless link; receiving, by the control entity from the first network node, a first network node-measured receive-transmit (Rx-Tx) time difference measurement for the first wireless link; and receiving, by the control entity from the second network node, a second network node-measured receive-transmit (Rx-Tx) time difference measurement for the second wireless link.

According to one arrangement of the method of FIG. 2, the determining, by the control entity, whether or not the first wireless link of the user device has an asymmetric propagation delay is performed based at least on the: time difference of arrival (TDoA) measurement, the user device-measured receive-transmit (Rx-Tx) time difference measurement for the first wireless link, the user device-measured receive-transmit (Rx-Tx) time difference measurement for the second wireless link, the first network node-measured receive-transmit (Rx-Tx) time difference measurement for the first wireless link, and the second network node-measured receive-transmit (Rx-Tx) time difference measurement for the second wireless link.

According to one arrangement of the method of FIG. 2, the performing, if the first wireless link of the user device has an asymmetric propagation delay, at least one action comprises the user device performing at least one of the following actions: sending information to the user device, a network node, a core network, or an application, to provide a notification that the first wireless link for the user device has an asymmetric propagation delay; sending information to the user device, a network node, a core network, or an application, to provide a notification that an accurate time synchronization or Time of Day (ToD) indication cannot be received by the user device via the first wireless link based on the asymmetric propagation delay of the first wireless link; sending information to the user device instructing or causing the user device to perform at least one further signal measurement with respect to a different wireless link and/or using one or more different beams than was used for the first wireless link; or, sending information to the user device to instruct or cause the user device to obtain time synchronization or Time of Day indication from a wireless link that is different from the first wireless link and/or from a network node that is different than the first network node.

According to one arrangement of the method of FIG. 2, the control entity comprises at least one of: a location management function (LMF) that can detect a propagation delay asymmetry for a wireless link; a base station, gNB, or other network node, that can detect a propagation delay asymmetry for a wireless link; or a propagation delay (PD) asymmetry detector provided within a wireless network.

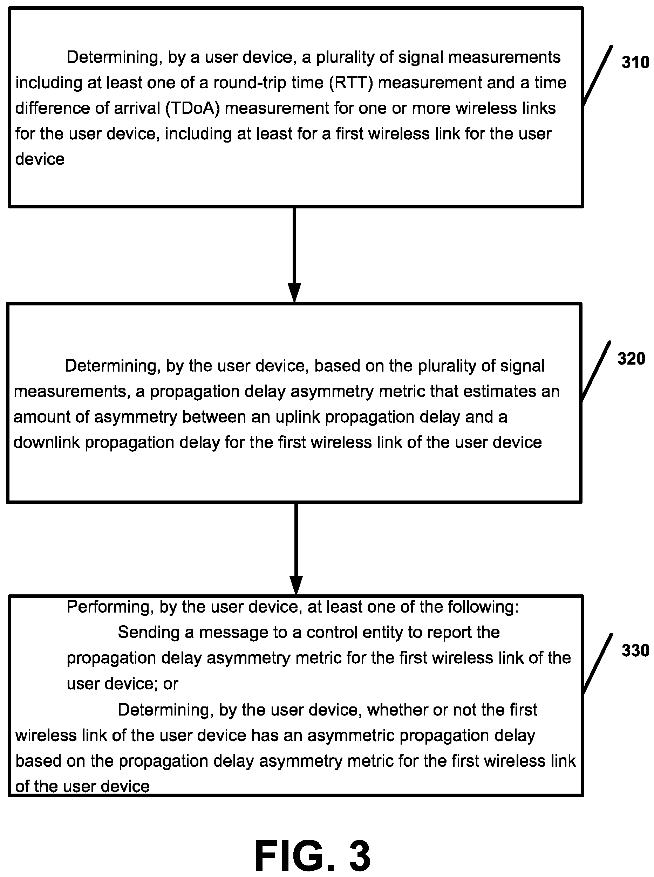

FIG. 3 is a flow chart illustrating operation of a user device (e.g., UE) according to an example embodiment. Operation 310 includes determining, by a user device (e.g., UE), a plurality of signal measurements including at least one of a round-trip time (RTT) measurement and a time difference of arrival (TDoA) measurement for one or more wireless links for the user device, including at least for a first wireless link for the user device.

With respect to operation 310, according to an example embodiment, the user device (or UE) may perform one or more of the measurements, and may receive one or more measurements from one or more network nodes (e.g., gNBs, BSs, DUs). The user device (UE) may have one or more wireless links, such as a wireless link to gNB0 (UE-gNB0 wireless link), a wireless link to gNB1 (UE-gNB1 wireless link), etc. In an example embodiment, a round trip time (RTT) measurement may be determined or estimated by the UE based on a timing advance (TA). Alternatively, RTT may be determined based on receive-transmit time difference measurements. For example, $RTT_{UE-gNB0}$ (round trip time for the wireless link between UE and gNB0) may be determined as: $RTT_{UE-gNB0} = (Rx-Tx)_{UE} - (Rx-Tx)_{gNB0}$; and, with respect to the wireless link between UE and gNB1, a $RTT_{UE-gNB1}$ (round trip time for wireless link between UE and gNB1) may be determined as: $RTT_{UE-gNB1} = (Rx-Tx)_{UE} - (Rx-Tx)_{gNB1}$. Thus, the UE may perform the following measurements: a $(Rx-Tx)_{UE}$, which is the receive-transmit (Rx-Tx) time difference measurement for the UE-gNB0 wireless link as measured by the UE; a $(Rx-Tx)_{UE}$, which is the receive-transmit (Rx-Tx) time difference measurement for the UE-gNB1 wireless link as measured by the UE. The UE may also receive some measurements from network nodes (e.g., gNBs, DUs, BSs). The UE may receive from gNB0, a $(Rx-Tx)_{gNB0}$, which is the receive-transmit (Rx-Tx) time difference measurement for the UE-gNB0 wireless link as measured by the gNB0. The UE may also receive $(Rx-Tx)_{gNB1}$, which is the receive-transmit (Rx-Tx) time difference measurement for the UE-gNB 1 wireless link as measured by the gNB1.

The UE may then determine a RTT for each of the two wireless links, including determining a round trip time (RTT) for the UE-gNB0 wireless link as $RTT_{UE-gNB0} = (Rx-Tx)_{UE} - (Rx-Tx)_{gNB0}$; and determining a round trip time (RTT) for the UE-gNB1 wireless link as $RTT_{UE-gNB1} = (Rx-Tx)_{UE} - (Rx-Tx)_{gNB1}$.

The UE may also determine the TDoA for the two wireless links (e.g., for the UE-gNB0 wireless link, and the UE-gNB 1 wireless link). TDoA may be measured or determined by the UE as a time difference (or time interval) between the UE's reception of signals (e.g., reference signals) received by the UE from gNB0 (via the UE-gNB0 wireless link) and gNB1 (via the UE-gNB 1 wireless link).

With respect to the method of FIG. 3, operation 320 includes determining, by the user device (e.g., UE), based on the plurality of signal measurements, a propagation delay (PD) asymmetry metric that estimates an amount of asymmetry between an uplink propagation delay and a downlink propagation delay for the first wireless link of the user device. For example, the UE may determine a PD asymmetry metric (A) based on the following Eqn. 1:

$$A = 2*TDoA - (RTT_{UE-gNB1} - RTT_{UE-gNB0}) \ \ (Eqn. \ 1).$$

With respect to the method of FIG. 3, operation 330 includes performing, by the user device, at least one of the following: sending a message to a control entity to report the propagation delay asymmetry metric for the first wireless link of the user device; or determining, by the user device, whether or not the first wireless link of the user device has an asymmetric propagation delay based on the propagation delay asymmetry metric for the first wireless link of the user device. Thus, as indicated by operation 330, after determining the PD asymmetry metric (operation 320), the UE may either: 1) send a message to a control entity to report the PD asymmetry metric for the first wireless link (e.g., for the UE-gNB0 wireless link) (e.g., which may allow the control entity to determine whether or not the first wireless link of the UE has asymmetric PD), or 2) determine (by the UE itself) whether or not the first wireless link of the UE has an asymmetric PD based on the PD asymmetry metric (A) for the first wireless link. For example, the UE may determine that the first wireless link has an asymmetric PD if the PD asymmetry metric is greater than a PD asymmetry threshold. Otherwise, the UE may determine that the first wireless link does not have an asymmetric PD if the PD asymmetry metric is less than or equal to a PD asymmetry threshold.

With respect to the method of FIG. 3, the determining a plurality of signal measurements may include performing, by the user device (UE), at least one signal measurement; receiving, by the user device (e.g., UE) from a first network node (e.g., gNB0), at least one signal measurement; and receiving, by the user device (e.g., UE) from a second network node (e.g., gNB1), at least one signal measurement.

With respect to the method of FIG. 3, the determining a plurality of signal measurements may include the following: measuring, by the user device (e.g., UE), a time difference of arrival (TDoA) measurement, based on a signal received by the user device from a first network node (e.g., gNB0) via the first wireless link, and a signal received by the user device (e.g., UE) from a second network node (e.g., gNB1) via a second wireless link; measuring, by the user device (e.g., UE), a user device-measured receive-transmit (Rx-Tx) time difference measurement for the first wireless link, and a user device-measured receive-transmit (Rx-Tx) time difference measurement for the second wireless link; receiving, by the user device from the first network node, a first network node-measured receive-transmit (Rx-Tx) time difference measurement for the first wireless link; and receiving, by the user device from the second network node, a second network node-measured receive-transmit (Rx-Tx) time difference measurement for the second wireless link.

The method of FIG. 3 may further include receiving, by the user device, at least one of the following: a measurement configuration that provides a configuration for the user device to perform at least one signal measurement of the plurality of signal measurements; and/or configuration information that configures the user device to determine a propagation delay asymmetry metric that estimates an amount of asymmetry between an uplink propagation delay and a downlink propagation delay for the first wireless link.

The method of FIG. 3 may further include (e.g., at least in the case where the UE sends a message to a control entity to report the PD asymmetry metric): receiving, by the user device (e.g., UE) from the control entity, an indication whether or not the first wireless link of the user device has an asymmetric propagation delay.

The method of FIG. 3 may further include receiving, by the user device (e.g., UE) from the control entity, an indication that the first wireless link of the user device does not have an asymmetric propagation delay; receiving, by the user device from a network node via the first wireless link, a time synchronization or Time of Day (ToD) indication. These operations may be performed, e.g., in the case where the UE sends a message to the control entity indicating the PD asymmetry metric for the first wireless link.

The method of FIG. 3 may further include receiving, by the user device (e.g., UE) from the control entity, an indication that the first wireless link of the user device has an asymmetric propagation delay; and performing one or more of the following based on the first wireless link having an asymmetric propagation delay: performing signal measurements with respect to one or more other wireless links or using one or more different beams; determining, by the user device, a propagation delay asymmetry metric for a different wireless link; receiving a time synchronization or Time of Day (ToD) indication from a different wireless link that does not have a propagation delay asymmetric; receiving, by the user device, information that instructs or causes the user device to obtain time synchronization or Time of Day indication from a wireless link that is different from the first wireless link and/or from a network node that is different than the first network node; and/or receiving, by the user device, a time synchronization or a Time of Day indication from a wireless link that is different from the first wireless link and/or from a network node that is different than the first network node.

With respect to the method of FIG. 3, the determining (320), by the user device, whether or not the first wireless link of the user device has an asymmetric propagation delay comprises the user device performing the following: receiving, by the user device from the control entity, a propagation delay asymmetry threshold (T); comparing the propagation delay asymmetry metric (A) to the propagation delay asymmetry threshold (A) (e.g., to determine whether the PD asymmetry metric (A) is greater than the threshold (T); and determining whether or not the first wireless link of the user device has an asymmetric propagation delay or not, based on the comparing. For example, the UE/user device may determine that the first wireless link has an asymmetric PD if the PD asymmetry metric (A) is greater than the PD asymmetry threshold (T).

According to an example embodiment, techniques are described that may allow detecting and/or indicating a presence of PD asymmetry for one or more wireless links, and one or more actions that may be performed in response to such possible or estimated PD asymmetry, e.g., to mitigate the asymmetric link and/or respond to the PD asymmetry. In an illustrative example embodiment, assessment of PD asymmetry for a wireless link(s) may be based on RTT and TDoA measurements from two or more radio (wireless) link pairs. For example, a first wireless link may include a UE-gNB0 wireless link between the UE and gNB0, and a second wireless link may include a UE-gNB 1 wireless link between the UE and gNB1, etc. A control entity (e.g., LMF, gNB, or other node), or a UE may detect or determine whether or not PD asymmetry is present for a wireless link(s), e.g., based on measurements performed by the UE and at least two network nodes (e.g., at least gNB0, gNB 1).

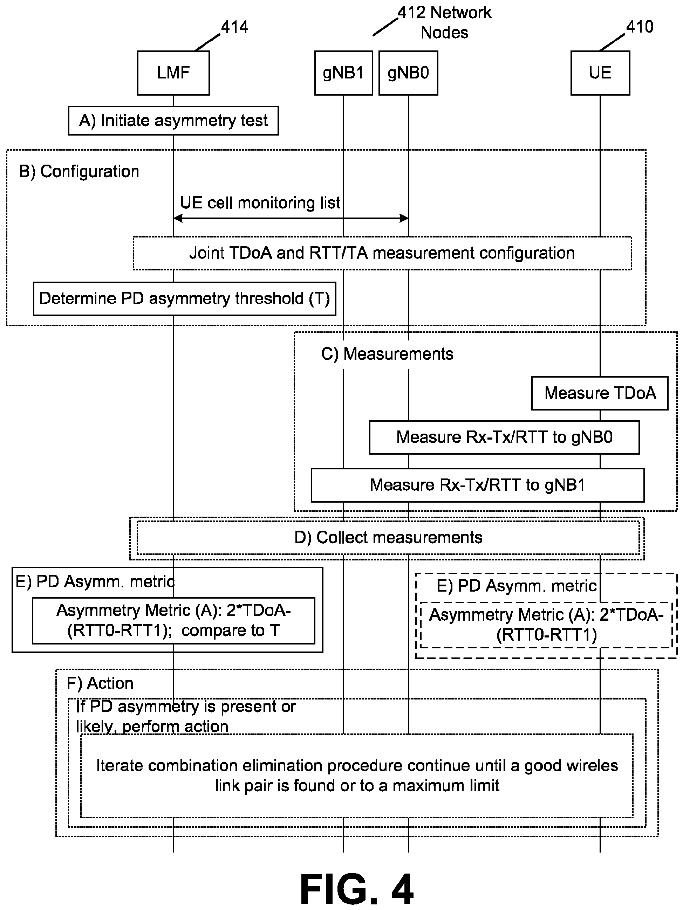

FIG. 4 is a diagram illustrating an operation of a propagation delay asymmetry detection procedure according to an example embodiment. A UE 410 may be in communication with a plurality of network nodes (or cells) 412, such as with gNB0, gNB1, etc. A wireless link may be provided between each the network nodes and UE 410, such as a UE-gNB0 wireless link, a UE-gNB 1 wireless link, etc. A control entity may be provided, such as a LMF (location management function), a gNB, a core network block or function, or other node or entity within a wireless network that may be involved in determining whether a PD asymmetry is present for one or more wireless links and/or determining one or more actions to be performed in response to determining or detecting PD asymmetry for a wireless link. Operations A) - F) are shown in the example PD asymmetry detection procedure of FIG. 4.

At A), a PD asymmetry test or procedure may be initiated or started, e.g., by a control entity, such as a LMF, gNB or other node or entity, within the wireless network. A PD asymmetry detection procedure may be triggered or initiated, e.g., based on a need for accurate time synchronization, a need for accurate positioning measurement, and/or upon one or more radio access changes for a UE (e.g., a change for a UE in a cell, a beam, and/or or UE location, and/or UE movement within a network, or other UE changes or network changes). An example implementation may be to determine a PD asymmetry at the control entity or LMF (UE or gNB or LMF initiated), which may configure RTT and TDoA measurements at the UE and gNBs. For example, in order to determine whether or not PD asymmetry is present for a wireless link(s), a PD asymmetry metric (A) may be determined or calculated based on signal measurements. The PD asymmetry metric (A) may be determined or calculated by the control entity or by the UE, for example. Detecting a (e.g., estimated, or possible or likely) link having PD asymmetry, may cause an action(s) to be performed, e.g., to mitigate the PD asymmetry and/or improve reliability of the timing synchronization for the UE, e.g., by causing the UE to select a new network node (gNB), cell or one or more beams to receive timing synchronization or ToD information through such new gNB, new cell and/or new beam(s) that are not indicated as having PD asymmetry, and thus, more reliable for providing timing synchronization to the UE, and/or other action to be performed.

At B) of FIG. 4, the control entity (e.g., LMF 414) configures the RTT and TDoA measurements at the UE and gNBs. This may include, e.g., sending a message(s) to configure the gNBs and UE with TDoA and RTT measurement configuration. This message may configure the UE and/or gNBs with reference signals that should be transmitted and/or received/measured (e.g., PRS, SRS, CSI-RS, SSB signals), such as to perform one or more signal measurements based on received PRS or SSB reference signals; to information UE to transmit a sounding reference signal (SRS) for Rx-Tx measurement, which may be part of a Rx-TX configuration used for positioning; where (which time/frequency resources) to measure receive time, and where (what time/frequency resources) to measure transmit time. We might piggy-back on the existing Rx-TX configuration configured for positioning, or might additionally configure RX-TX configuration for PD asymmetry calculation if not already configured for positioning; and indication to UE of whether a TA (timing advance with respect to one or more gNBs) or Rx-TX measurements should be used to determine or calculate a RTT measurement; an indication of one or more cells or network nodes, links, and/or beams (or beam pairs) that should be measured (Rx-Tx measurements, and/or TDoA measurements). Thus, at B) of FIG. 4, the LMF may configure UE and gNBs for the signal measurements to be performed (conducted) (e.g., RTT, Rx-Tx, and TDoA), and/or one or more parameters associated with such signal measurements (e.g., what reference signals to transmit, receive, measure, what measurements to perform, by the involved entities (UE, gNBs), including a configuration of UE and gNBs measuring and reporting TDoA (measured by UE, or by gNB), and Rx-Tx (measured by both UE and gNB). Either UE or gNBs may measure TDoA. Thus, the configuration at B) of FIG. 4 may involve the network or LMF or control entity sending message(s) to configure UE and gNBs to receive or transmit specific reference signals (e.g., PRS, SRS, SSB) over certain resources, and to perform specific measurements, such as Rx-TX and TDoA measurements, and them report these measurements to an entity, such as UE or control entity (e.g., LMF 414). The configuration for transmission of signals, reception of signals, and measurement and reporting of signals may be configured for different cells (or network nodes), gNB-UE links, and/or beam pairs.

At C) of FIG. 4, various signal or timing measurements are performed by the UE and/or network nodes (e.g., gNBs, such as gNBO, gNB1, ...). As noted, signal measurements that may be performed and used for PD asymmetry detection may include, e.g., TDoA measurement (e.g., measured by UE), receive-transmit (Rx-Tx) time difference measurements measured by both UE and each gNB, and/or other signal measurements.

At D) The signal measurements may be reported to the entity (e.g., UE or control entity or LMF 414) that is responsible for determining if PD asymmetry of a wireless link is present, e.g., the entity that is responsible for determining (calculating) the PD asymmetry metric (A), such as per the Eqn. 1, as an example. Thus, for example, the Rx-Tx, RTT, and/or TDoA measurements may be forwarded to the entity (e.g., UE or control entity, such as LMF 414) that is responsible for calculating the PD asymmetry metric for a wireless link (which may provide an indication of whether or not PD asymmetry is or may be present for the wireless link, and hence timing synchronization received by the UE via such link will be unreliable). Thus, at D), the entity responsible for calculating the PD asymmetry metric (or determining whether or not PD asymmetry is present for a wireless link) collects (receives) signal measurements or calculations from other entities (e.g., from UE and/or gNB(s)).

At E) of FIG. 4, the PD asymmetry metric (A) is calculated, e.g., based on Eqn. 1, or other equation or technique, where the PD asymmetry metric provides an indication of whether or not PD asymmetry may be (or is likely) present on a wireless link(s). As noted, the PD asymmetry metric (A) may be determined or calculated by the UE, or by a control entity (e.g., such as a LMF 414, a gNB, a CU, a DU, a core network node, or other entity that may be involved in determining whether PD asymmetry is present for a wireless link).

At F), if the wireless link is determined as having or likely having PD asymmetry, then one or more actions may be performed, e.g., to address, reduce or mitigate the PD asymmetry for the UE, such as causing the UE to select a different wireless link (e.g., a different link, network node and/or beam(s) that is not indicated as having PD asymmetry), sending a message to an application indicating that timing or time synchronization for the UE is currently unreliable and/or does not meet minimum timing synchronization accuracy requirements, or other action. Also, an action may be performed where a different pair of links may be assessed for PD asymmetry, that has 1 link in common to the previously assessed pair of links. For example, if the measurements for gNBO and gNB1 indicated PD asymmetry for UE-gNBO wireless link (based on A>T), then this may indicate that it is likely that at least one of these two UE links (UE-gNBO wireless link and UE-gNB1 wireless link) may have PD asymmetry, although it may not be clear which of the two wireless links has (or whether both of the wireless links have) PD asymmetry. Thus, LMF or UE may assume that the link being assessed may have PD asymmetry (and at the least, such wireless link may be unreliable). But further PD asymmetry assessments may be performed to narrow down or determine which specific link(s) may have PD asymmetry. Thus, for example, if PD asymmetry is present, but it is not clear which wireless link is the source for PD asymmetry, the LMF or control entity can initiate an elimination procedure to narrow down the link pair in subject, and find a pair without PD asymmetry.

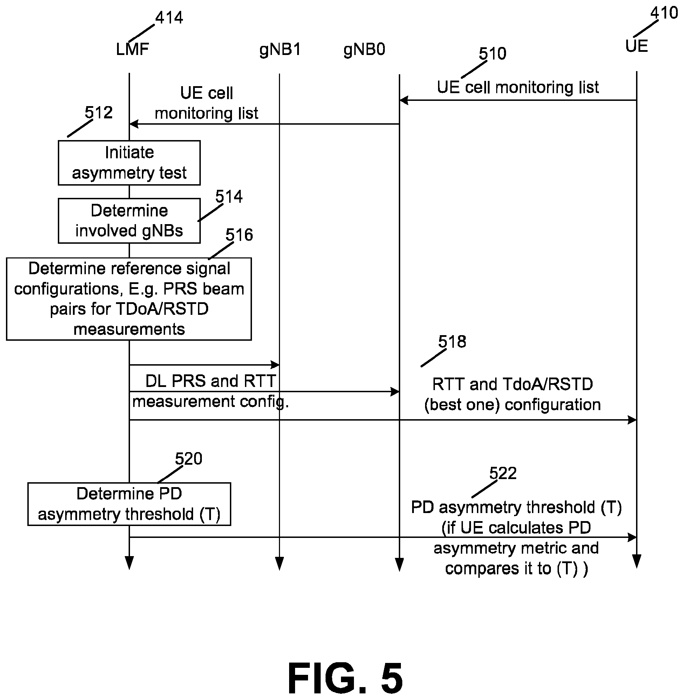

FIG. 5 is a diagram illustrating operation A) (initiating PD asymmetry test) and B) (configuration) of FIG. 4 according to an example embodiment. FIG. 5 illustrates initiating and configuration of nodes/UE for PD asymmetry detection, for the case where the LMF 414 (or other control entity) calculates the PD asymmetry metric (A), or otherwise determines whether PD asymmetry is present for a wireless link or may be present for a pair of (e.g., two) wireless links. As shown in FIG. 5, for example, the LMF 414 (or control entity) may coordinate and/or control one or more of: the transmission of signals (e.g., reference signals), measurements, and/or reporting of signal measurements that may be performed as part of PD asymmetry detection for a wireless link or a pair of wireless links. Alternatively, the PD asymmetry detection or PD asymmetry metric calculation may be performed by a gNB, BS, DU, core network, or other network node, or by a UE. Detecting PD asymmetry may be desirable for both UE positioning and accurate time synchronization.

At 510, the UE 410 may send a UE cell monitoring list to serving gNB (e.g., gNB0), which may be forwarded to LMF 414 or control entity. The UE cell monitoring list may indicate one or more cells or gNBs that the UE is receiving reference signals from, and measuring one or more signal parameters (e.g., reference signal received power) for such signals from such cells or network nodes. It may include a list of cells or network nodes from which the UE has received a reference signal at a minimum RSRP, for example.

At 512, the PD asymmetry test or PD asymmetry metric calculation procedure is initiated or triggered. A PD asymmetry calculation procedure (e.g., to cause signals to be transmitted, and measurements to be performed and reported to allow the PD asymmetry metric to be calculated) may be triggered by one or more conditions or factors, such as; a timer expiry, establishment of a new connection for a UE, or as a reaction to a reported mobility event for a UE from the RAN (e.g., by one or more gNBs, or DUs). In an alternative implementation, the gNB or the UE may trigger the PD asymmetry assessment or PD asymmetry metric calculation, e.g., based on the arrival of a new cell to the monitoring list, a change of beam, power reports, a timer expiry, or other mobility reports, or changes in RTT or TDoA measurements.

At 514, the control entity or LMF 414 determines the network nodes or gNBs that will be involved in the PD asymmetry calculation procedure, e.g., as subset of or based on UE cell monitoring list received from UE 410. For example, upon triggering of the PD asymmetry test or assessment (or PD asymmetry metric calculation procedure), the LMF needs to identify which UE wireless links should be tested (e.g., which UE-gNB pairs). For this it has the UE's cell monitoring list, which it can retrieve from the RAN or gNBs. The LMF 414 may choose the link combination based the N strongest (where N can be fixed or determined on an asymmetry certainty threshold). The number of combinations, for example, can also be determined on the M (e.g., three) most uncorrelated link pairs (e.g., link pairs which do not share a same gNB/base-station or frequency band), and secondly, which may be sorted by UL and DL bandwidth and/or signal strength.

At 516, the control entity or LMF 414 determines reference signal configurations for reference signals to be transmitted and measured as part of this procedure, which may include determining a reference signal (e.g., PRS) beam pair (e.g., which may include a gNB DL transmit beam and a UE DL receive beam) for the transmission of PRS signals to the UE, and/or beam pairs to be used for transmission and/or measuring of TDoA measurement. RSTD (reference signal time difference) may be measured by a UE to estimate the TDoA, based on a signal(s) received from one or more gNBs, for example. Therefore, for example, TDoA may be estimated or measured by performing a RSTD measurement.

At 518, the control entity (e.g., LMF 414) may send a reference signal transmission, measurement and/or reporting configuration to the network nodes (gNBO, gNB1) and UE 410 to configure various parameters for the transmission of specific reference signals, via resources, beam, and to configure the UE and gNBs to perform and reports specific signal measurements based on these received signals.

At 520, the control entity (e.g., LMF 414) may determine the PD asymmetry threshold (T). The PD asymmetry threshold may, for example, be based on multiple factors such as gNB implementation, desired configurations of the involved reference signals and the scenario of which the network is operating (e.g., T may be different if used for a rural or an urban scenario). The threshold (T) may determine the sensitivity towards correct indications (of PD asymmetry for a link) and false alarms and missed indications. A simple approach is to set the PD asymmetry threshold (T) to a fixed value, e.g., 200ns for all link combinations. Such a value can be determined by measurements in the scenario the cells are covering or by a simulation study. Alternatively, and more sophisticated, is to take into account the expected accuracy of each link involved in the asymmetry metric. The uncertainty of each transmission may be reflected in the measurement uncertainty, e.g., 2xTDoA uncertainty + RTT0 uncertainty + RTT1 uncertainty, according to an illustrative example embodiment.

In some cases, the UE 410 may determine the PD asymmetry metric (A), and may compare the PD asymmetry metric to the PD asymmetry threshold (T) to determine if a wireless link(s) is or is likely to have PD asymmetry. Thus, at 522, the control entity (e.g., LMF 414) may transmit the PD asymmetry threshold (T) to UE 410, in event or case where the UE 410 calculates the PD asymmetry metric (A) and compares the PD asymmetry metric (A) to the PD asymmetry threshold (T), to determine if a link(s) has PD asymmetry. The UE may then perform 1 or more actions to mitigate or address the PD asymmetry, e.g., such as reselecting a different wireless link, beam(s) and/or cells or network nodes over which the UE will receive at least time synchronization or ToD. Note that different cells, wireless links and/or beams may be used by a UE to receive time synchronization or ToD (e.g., such cells, wireless links and/or beams that indicate no PD asymmetry), as compared to the cell, wireless link and/or beams used by the UE to receive and/or transmit data (e.g., the wireless link and/or beams having a highest RSRP). Thus, a UE may use a first cell, a first wireless link and/or first beam(s) to receive data, while using a second cell, second wireless link and/or a second beam(s) (e.g., UE DL receive beam) to receive time synchronization or ToD information. This may be because the strongest or best wireless link, cell and/or beam(s) (e.g., having a highest measured RSRP as measured by UE) may have a PD asymmetry, and thus may not be suitable or preferred for the UE to receive time synchronization or ToD information.

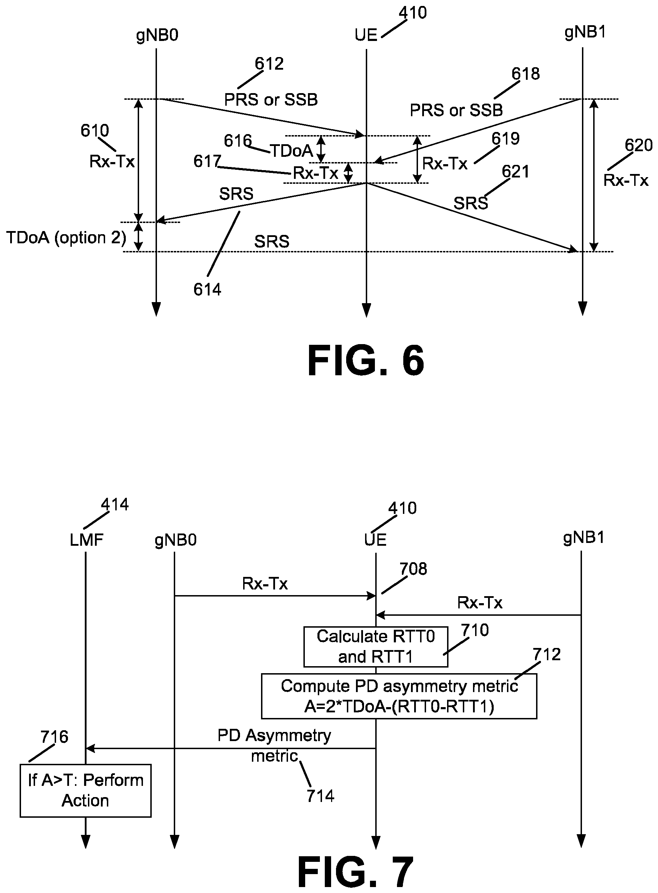

FIG. 6 is a diagram illustrating operation C) of FIG. 4, including Time Difference of Arrival (TDoA) measurements and receive-transmit (Rx-Tx) time difference measurements according to an example embodiment. Here, two or more cells (or network nodes) transmit SSB or PRS used for the TDoA measurement. where the UE transmits SRS as a response. Both the gNB and the UE also use these UL and DL reference signals to measure Rx-Tx (e.g., there may be no need to configure separate reference signals for TDoA and Rx-Tx, as both of these measurements can share or be based on at least the DL reference signals). For example, as shown in FIG. 6, gNB0 may measure a receive-transmit (Rx-Tx) time difference measurement 610 as a time difference between gNB0 transmission of PRS or SSB 612 and reception of SRS signal 614. UE 410 may measure TDoA 616 as a time difference or time interval between UE reception of PRS or SSB signal 612 from gNB0 and PRS or SSB signal 618 from gNB1. Note that gNB0 and gNB1 may be synchronized, and thus signals 612 and 618 may be transmitted at the same time by gNB0 and gNB1. UE 410 may also measure receive-transmit (Rx-Tx) time difference measurement 617 based on signal 618 (transmitted by gNB1 to UE 410) and signal 621 (signal transmitted by UE 410 to gNB1) for gNB1. UE may also measure receive-transmit (Rx-Tx) time difference measurement 619 for gNB0 based on PRS or SSB signal 612 (transmitted by gNB0 to UE 410) and SRS signal 614 (transmitted by UE 410 to gNB0). Alternatively, as option 2, TDoA may be measured by gNB0 and gNB1 as time interval between arrival of SRS signal 614 (at gNB0) and SRS signal 621 (at gNB1). These are some example measurements that may be used to determine or calculate a PD asymmetry metric (A), for example.

FIG. 7 is a diagram illustrating operations D) and E) of FIG. 4, including measurement collection and propagation delay (PD) asymmetry metric calculation in which the UE/user device calculates and forwards the PD asymmetry metric according to an example embodiment. At 708, the UE receives gNB measured Rx-Tx time difference measurements from gNB0 and gNB1. Although not shown, the UE 410 may perform its own measurements of Rx-Tx time difference measurements for gNB0 and gNB1, and TDoA (e.g., TDoA 616, with respect to signals from gNB0 and gNB1, FIG. 6). At 710, the UE calculates RTT0 ($RTT_{UE\text{-}gNB0}$) and RTT1 ($RTT_{UE\text{-}gNB1}$), based on the UE calculated Rx-Tx time difference measurements, and the UE calculated Rx-Tx time difference measurements. At 712, the UE calculates the PD asymmetry metric (A), e.g., based on Eqn. 1, as:

$$A = 2 * \text{TDoA} - (RTT_{UE\text{-}gNB1} - RTT_{UE\text{-}gNB0}) \quad (\text{Eqn. 1})$$

At 714, the UE sends the PD asymmetry metric (A) to the control entity, e.g., to LMF 414.

At 716, the LMF may determine whether or not PD asymmetry metric (A) is greater than PD asymmetry threshold (T). If so, then this indicates the wireless link, or possibly both wireless links between UE and gNB0 and gNB1, may have PD asymmetry, and LMF 414 may perform an action at 716.

Note, that instead of forwarding the PD asymmetry metric (A) to control entity or LMF 414, the UE 414 may (itself) compare the PD asymmetry metric (A) to the PD asymmetry threshold (T), to determine whether the wireless link(s) may have PD asymmetry. The UE 410 may report the results of this comparison, and/or UE 410 may perform one or more actions, e.g., obtain a new link or link pair, beam(s), and/or cells or gNBs, and then the UE 410 may perform a PD asymmetry assessment of the new or updated wireless link(s) (with other cells or other network nodes). The UE may obtain time synchronization or ToD information via a wireless link that is not determined to have PD asymmetry (to improve reliability and/or accuracy of the time synchronization or ToD received by the UE).

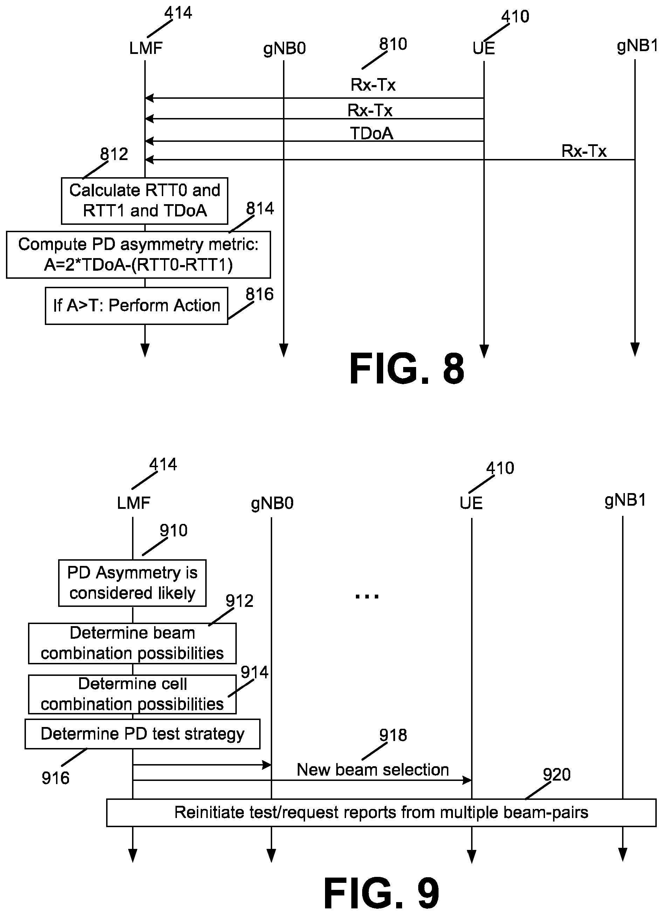

FIG. 8 is a diagram illustrating operations D) and E) of FIG. 4, including measurement collection and propagation delay (PD) asymmetry metric calculation in which the control entity (such as a location management function LMF) or other control entity) calculates the PD asymmetry metric according to an example embodiment. At 810, the UE forwards or reports its signal measurements (TDoA and Rx-Tx time difference measurements with respect to gNBO and gNB1) to the control entity (e.g., LMF 414). At 812, the LMF calculates RTTO, RTT1, and TDoA. At 814, the LMF 414 may calculate the PD asymmetry metric (A) and compare it to the PD asymmetry threshold (T). Operations 812, 814 are same or similar to operations 710, 712 of FIG. 7 (but are performed by LMF 414). At 816, if PD asymmetry metric (A) is greater than PD asymmetry threshold (T), then the LMF 414 may perform one or more actions, such as notifying an application, the core network or network node, that the time synchronization for UE 410 is currently unreliable or may not meet accuracy requirements, or may send a message to UE 410 to instruct it to obtain a new wireless link, cell network node/gNB or beam(s) over which to obtain time synchronization or ToD, or other action.

With respect to operation F) of FIG. 4, one or more actions may be performed (by LMF or UE or other entity) based on a determination that a wireless link(s) is determined to have PD asymmetry, e.g., in order to mitigate the PD asymmetry, or to improve time synchronization of the UE, such as: LMF sending a message to the UE to notify UE of PD asymmetry for a wireless link(s); send a message to cause the UE to make a change to a wireless link, beam(s), cells, or network nodes, via which the UE may at least receive time synchronization or ToD, or report the PD asymmetry to an application or other node.

FIG. 9 is a diagram illustrating technique for detecting of one or more wireless links as being asymmetric, among a group of wireless links for a UE, according to an example embodiment. In this case, the LMF or UE has determined that PD asymmetry of a particular pair of wireless links is likely. The LMF may determine if a link under test is PD asymmetric, and if so, select another link which is not asymmetric. This can involve a new set of alternative beam configurations which eventually requires that a new set of measurements. In a possible additional embodiment, the LMF can initiate a procedure to determine the asymmetry magnitude and report the scale to the AMF and gNB to include the asymmetry into the time synchronization accuracy. In some cases, the worst case PD asymmetry is the RTT.

If a UE has say 4 possible links (A, B, C, D) and is interested to understand if its connection (link) A is symmetric or asymmetric, the UE can calculate the example method for all pairs (A-B, A-C, A-D, B-C, B-D, and C-D) and use all those PD asymmetry metric calculations (compared to the threshold (T)) to improve the detection of whether link A is PD asymmetric. There are other methods possible where characteristics of all pairs is fed to a single algorithmic framework to improve further the detection of symmetry/asymmetry of A. Hence, the invention should be generally linked to all kinds of metrics that allow to leverage the RTT and time-difference of arrival measurements to estimate asymmetry. We focus on exemplification of the method using measurements and protocols that are likely to be available to a UE, e.g., RTT measurements to the cells and distance of time of arrival for different signals in synchronized networks (e.g., which is used also as part of positioning framework).

In this manner, an elimination strategy may be used by the UE or the LMF to enhance the certainty of the PD asymmetry indication, by comparing the link under test with other links (e.g., 2 or more). A link A is compared first with link B and then with link C, and eventually link B and C are compared. As long as a TDoA and an RTT measurement is available for each combination, an PD asymmetric metric can be calculated for all combinations (and compared to the threshold (T)) of these link pairs and the combination can be included in the elimination strategy (without the need for additional measurements to be triggered in this step). The more links that the node (LMF or UE) has measurements for, the more accurate the method becomes, and the node can identify the specific link that is asymmetric, and which link is not asymmetric.

Note that some of the links can share measurements, which increases the need for multiple links. As another option the same set of links (e.g., A and B) can be used with different beams to determine if this removes the asymmetry. For example, a UE may be requested to use an omni-directional beam (or simply a broader beam) on a subsequent test to see if the asymmetry is removed. This could be a function of the spatial direction of the beam filtering out the LoS (line of sight) component of the link. Then the new beam pair can be used for synchronization, positioning, etc, while noting that for data purposes it may still be better to use the original beam.

Referring to FIG. 9, at 910, the LMF 414 determines that PD asymmetry for a wireless link is likely (e.g., based on PD asymmetry metric (A) being greater than the threshold (T)). At 912, the LMF determines beam combination possibilities. At 914, the LMF determines cell combination possibilities. At 916, the LMF determines a PD asymmetry test or assessment strategy, e.g., to test various links and/or beams, in order to identify one or more specific links that may have PD asymmetry. AT 918, the LMF 414 may send a new beam selection to UE and gNB0. At 920, LMF 414 may initiate a new PD asymmetry test procedure for multiple beam pairs, or new link and beam configuration that has been sent to UE and gNBs.

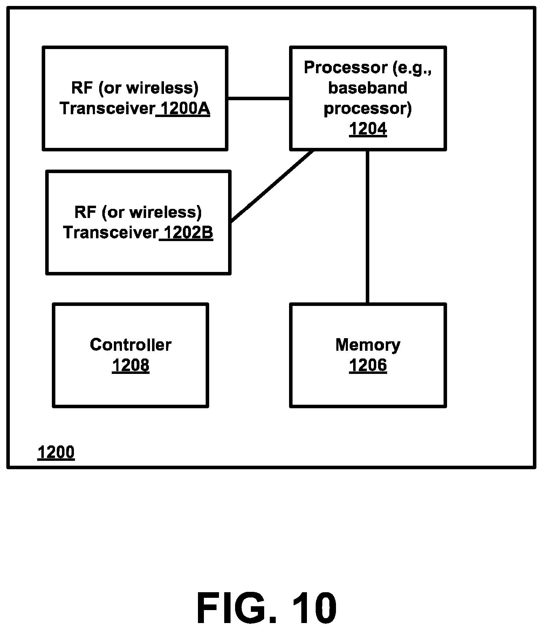

FIG. 10 is a block diagram of a wireless station (e.g., AP, BS or user device/UE, or other network node) 1200 according to an example embodiment. The wireless station 1200 may include, for example, one or more (e.g., two as shown in FIG. 10) RF (radio frequency) or wireless transceivers 1202A, 1202B, where each wireless transceiver includes a transmitter to transmit signals and a receiver to receive signals. The wireless station also includes a processor or control unit/entity (controller) 1204 to execute instructions or software and control transmission and receptions of signals, and a memory 1206 to store data and/or instructions.

Processor 1204 may also make decisions or determinations, generate frames, packets or messages for transmission, decode received frames or messages for further processing, and other tasks or functions described herein. Processor 1204, which may be a baseband processor, for example, may generate messages, packets, frames or other signals for transmission via wireless transceiver 1202 (1202A or 1202B). Processor 1204 may control transmission of signals or messages over a wireless network, and may control the reception of signals or messages, etc., via a wireless network (e.g., after being downconverted by wireless transceiver 1202, for example). Processor 1204 may be programmable and capable of executing software or other instructions stored in memory or on other computer media to perform the various tasks and functions described above, such as one or more of the tasks or methods described above. Processor 1204 may be (or may include), for example, hardware, programmable logic, a programmable processor that executes software or firmware, and/or any combination of these. Using other terminology, processor 1204 and transceiver 1202 together may be considered as a wireless transmitter/receiver system, for example.

In addition, referring to FIG. 10, a controller 1208 (or processor 1204) may execute software and instructions, and may provide overall control for the station 1200, and may provide control for other systems not shown in FIG. 10, such as controlling input/output devices (e.g., display, keypad), and/or may execute software for one or more applications that may be provided on wireless station 1200, such as, for example, an email program, audio/video applications, a word processor, a Voice over IP application, or other application or software.

In addition, a storage medium may be provided that includes stored instructions, which when executed by a controller or processor may result in the processor 1204, or other controller or processor, performing one or more of the functions or tasks described above.

According to another example embodiment, RF or wireless transceiver(s) 1202A/1202B may receive signals or data and/or transmit or send signals or data. Processor 1204 (and possibly transceivers 1202A/1202B) may control the RF or wireless transceiver 1202A or 1202B to receive, send, broadcast or transmit signals or data.

The embodiments are not, however, restricted to the system that is given as an example, but a person skilled in the art may apply the solution to other communication systems. Another example of a suitable communications system is the 5G concept. It is assumed that network architecture in 5G will be quite similar to that of the LTE-advanced. 5G is likely to use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

It should be appreciated that future networks will most probably utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations may be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Embodiments of the various techniques described herein may be implemented in digital electronic circuitry, or in computer hardware, firmware, software, or in combinations of them. Embodiments may be implemented as a computer program product, i.e., a computer program tangibly embodied in an information carrier, e.g., in a machine-readable storage device or in a propagated signal, for execution by, or to control the operation of, a data processing apparatus, e.g.. a programmable processor, a computer, or multiple computers. Embodiments may also be provided on a computer readable medium or computer readable storage medium, which may be a non-transitory medium. Embodiments of the various techniques may also include embodiments provided via transitory signals or media, and/or programs and/or software embodiments that are downloadable via the Internet or other network(s), either wired networks and/or wireless networks. In addition, embodiments may be provided via machine type communications (MTC), and also via an Internet of Things (IOT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers.

Furthermore, embodiments of the various techniques described herein may use a cyber-physical system (CPS) (a system of collaborating computational elements controlling physical entities). CPS may enable the embodiment and exploitation of massive amounts of interconnected ICT devices (sensors, actuators, processors microcontrollers, ...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various embodiments of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, embodiments may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments may be implemented in a computing system that includes a back-end component, e.g., as a data server, or that includes a middleware component, e.g., an application server, or that includes a front-end component, e.g., a client computer having a graphical user interface or a Web browser through which a user can interact with an embodiment, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

**Claims**

1. A method comprising:

   determining (310), by a user device (410), a plurality of signal measurements including at least one of a round-trip time measurement and a time difference of arrival measurement for one or more wireless links for the user device, including at least a first wireless link for the user device;
   determining (320), by the user device, based on the plurality of signal measurements, a propagation delay asymmetry metric that estimates an amount of asymmetry between an uplink propagation delay and a downlink propagation delay for the first wireless link of the user device;
   performing (330), by the user device, at least one of the following:

   sending a message to a control entity to report the propagation delay asymmetry metric for the first wireless link of the user device; or
   determining, by the user device, whether or not the first wireless link of the user device has an asymmetric propagation delay based on the propagation delay asymmetry metric for the first wireless link of the user device.

2. The method of claim 1, wherein the determining a plurality of signal measurements comprises the following:

measuring, by the user device, a time difference of arrival measurement, based on a signal received by the user device from a first network node via the first wireless link, and a signal received by the user device from a second network node via a second wireless link;

measuring, by the user device, a user device-measured receive-transmit time difference measurement for the first wireless link, and a user device-measured receive-transmit time difference measurement for the second wireless link;

receiving, by the user device from the first network node, a first network node-measured receive-transmit time difference measurement for the first wireless link; and

receiving, by the user device from the second network node, a second network node-measured receive-transmit time difference measurement for the second wireless link.

3. The method of any of claims 1-2, further comprising receiving, by the user device, at least one of the following:

a measurement configuration that provides a configuration for the user device to perform at least one signal measurement of the plurality of signal measurements; or

configuration information that configures the user device to determine a propagation delay asymmetry metric that estimates an amount of asymmetry between an uplink propagation delay and a downlink propagation delay for the first wireless link.

4. The method of claim 1, wherein the determining, by the user device, whether or not the first wireless link of the user device has an asymmetric propagation delay comprises the user device performing the following:

receiving, by the user device from the control entity, a propagation delay asymmetry threshold;

comparing the propagation delay asymmetry metric to the propagation delay asymmetry threshold;

determining, based on the comparing, whether or not the first wireless link of the user device has an asymmetric propagation delay or not.

5. An apparatus comprising means for performing the method of any of claims 1 to 4.

6. A computer program product operable, when executed on a computer, to perform the method of any one of claims 1 to 4.

**Patentansprüche**

1. Verfahren, das Folgendes umfasst:

Bestimmen (310) einer Vielzahl von Signalmessungen, die mindestens eines von einer Umlaufzeitmessung und einer Ankunftszeitdifferenzmessung für einen oder mehrere drahtlose Links für eine Benutzervorrichtung (410) beinhalten, die mindestens einen ersten drahtlosen Link für die Benutzervorrichtung beinhalten, durch die Benutzervorrichtung;

Bestimmen (320) einer Ausbreitungsverzögerungsasymmetriemetrik, die ein Maß einer Asymmetrie zwischen einer Uplinkausbreitungsverzögerung und einer Downlinkausbreitungsverzögerung für den ersten drahtlosen Link der Benutzervorrichtung schätzt, durch die Benutzervorrichtung auf Basis der Vielzahl von Signalmessungen;

Durchführen (330) von mindestens einem von Folgendem durch die Benutzervorrichtung:

Senden einer Nachricht an eine Steuerentität, um die Ausbreitungsverzögerungsasymmetriemetrik für den ersten drahtlosen Link der Benutzervorrichtung zu melden; oder

Bestimmen durch die Benutzervorrichtung auf Basis der Ausbreitungsverzögerungsasymmetriemetrik für den ersten drahtlosen Link der Benutzervorrichtung, ob der erste drahtlose Link der Benutzervorrichtung eine asymmetrische Ausbreitungsverzögerung aufweist oder nicht.

2. Verfahren nach Anspruch 1, wobei das Bestimmen einer Vielzahl von Signalmessungen Folgendes umfasst:

Messen einer Ankunftszeitdifferenzmessung durch die Benutzervorrichtung auf Basis eines Signals, das von der Benutzervorrichtung via den ersten drahtlosen Link von einem ersten Netzwerkknoten empfangen wird, und eines Signals, das von der Benutzervorrichtung via einen zweiten drahtlosen Link von einem zweiten Netzwerkknoten empfangen wird;

Messen einer von einer Benutzervorrichtung gemessenen Empfang-Übertragung-Zeitdifferenzmessung für den ersten drahtlosen Link und einer von einer Benutzervorrichtung gemessenen Empfang-Übertragung-Zeitdifferenzmessung für den zweiten drahtlosen Link durch die Benutzervorrichtung;

Empfangen einer ersten von einem Netzwerkknoten gemessenen Empfang-Übertragung-Zeitdifferenzmessung für den ersten drahtlosen Link durch die Benutzervorrichtung vom ersten Netzwerkknoten; und

Empfangen einer zweiten von einem Netzwerkknoten gemessenen Empfang-Übertragung-Zeitdifferenzmessung für den zweiten drahtlosen Link durch die Benutzervorrichtung vom zweiten Netzwerkknoten.

3. Verfahren nach einem der Ansprüche 1 bis 2, das ferner das Empfangen von mindestens einem von Folgendem durch die Benutzervorrichtung umfasst:

einer Messauslegung, die eine Auslegung für die Benutzervorrichtung zum Durchführen von mindestens einer Signalmessung der Vielzahl von Signalmessungen bereitstellt; oder

Auslegungsinformationen, die die Benutzervorrichtung zum Bestimmen einer Ausbreitungsverzögerungsasymmetriemetrik auslegen, die ein Maß einer Asymmetrie zwischen einer Uplinkausbreitungsverzögerung und einer Downlinkausbreitungsverzögerung für den ersten drahtlosen Link schätzt.

4. Verfahren nach Anspruch 1, wobei das Bestimmen durch die Benutzervorrichtung, ob der erste drahtlose Link der Benutzervorrichtung eine asymmetrische Ausbreitungsverzögerung aufweist oder nicht, das Durchführen von Folgendem durch die Benutzervorrichtung umfasst:

Empfangen eines Ausbreitungsverzögerungsasymmetrieschwellwerts durch die Benutzervorrichtung von der Steuerentität;

Vergleichen der Ausbreitungsverzögerungsasymmetriemetrik mit dem Ausbreitungsverzögerungsasymmetrieschwellwert;

Bestimmen auf Basis des Vergleichens, ob der erste drahtlose Link der Benutzervorrichtung eine asymmetrische Ausbreitungsverzögerung oder nicht aufweist oder nicht.

5. Einrichtung, die Mittel zum Durchführen des Verfahrens nach einem der Ansprüche 1 bis 4 umfasst.

6. Computerprogrammprodukt, das betreibbar ist, wenn es auf einem Computer ausgeführt wird, das Verfahren nach einem der Ansprüche 1 bis 4 durchzuführen.

**Revendications**

1. Procédé comprenant les étapes suivantes :

déterminer (310), par un dispositif utilisateur (410), une pluralité de mesures de signaux comportant au moins une parmi une mesure de temps aller-retour et une mesure de différence de temps d'arrivée pour une ou plusieurs liaisons sans fil pour le dispositif utilisateur, comportant au moins une première liaison sans fil pour le dispositif utilisateur ;

sur la base de la pluralité de mesures de signaux, déterminer (320), par le dispositif utilisateur, une métrique d'asymétrie de retard de propagation qui estime une quantité d'asymétrie entre un retard de propagation de liaison montante et un retard de propagation de liaison descendante pour la première liaison sans fil du dispositif utilisateur ;

réaliser (330), par le dispositif utilisateur, au moins l'une des opérations suivantes :

envoyer un message à une entité de contrôle pour rapporter la métrique d'asymétrie de retard de propagation pour la première liaison sans fil du dispositif utilisateur ; ou

déterminer, par le dispositif utilisateur, si la première liaison sans fil du dispositif utilisateur a ou non un retard de propagation asymétrique sur la base de la métrique d'asymétrie de retard de propagation pour la première liaison sans fil du dispositif utilisateur.

2. Procédé selon la revendication 1, dans lequel le fait de déterminer une pluralité de mesures de signaux comprend les opérations suivantes :

mesurer, par le dispositif utilisateur, une mesure de différence de temps d'arrivée sur la base d'un signal reçu par le dispositif utilisateur en provenance d'un premier nœud de réseau via la première liaison sans fil, et sur la base d'un signal reçu par le dispositif utilisateur en provenance d'un deuxième nœud de réseau via une deuxième liaison sans fil ;

mesurer, par le dispositif utilisateur, une mesure de différence de temps de réception-transmission mesurée par le dispositif utilisateur pour la première liaison sans fil, et une mesure de différence de temps de réception-transmission mesurée par le dispositif utilisateur pour la deuxième liaison sans fil ;

recevoir, par le dispositif utilisateur en provenance du premier nœud de réseau, une mesure de différence de temps de réception-transmission mesurée par le premier nœud de réseau pour la première liaison sans fil ; et

recevoir, par le dispositif utilisateur en provenance du deuxième nœud de réseau, une mesure de différence de temps de réception-transmission mesurée par le deuxième nœud de réseau pour la deuxième liaison sans fil.

3. Procédé selon l'une des revendications 1 et 2, comprenant en outre le fait de recevoir, par le dispositif utilisateur, au moins l'un des éléments suivants :

une configuration de mesure qui fournit une configuration pour que le dispositif utilisateur réalise au moins une mesure de signal de la pluralité de mesures de signaux ; ou

des informations de configuration qui configurent le dispositif utilisateur pour qu'il détermine une métrique d'asymétrie de retard de propagation qui estime une quantité d'asymétrie entre un retard de propagation de liaison montante et un retard de propagation de liaison descendante pour la première liaison sans fil.

4. Procédé selon la revendication 1, dans lequel le fait de déterminer, par le dispositif utilisateur, si la première liaison sans fil du dispositif utilisateur a ou non un retard de propagation asymétrique comprend la réalisation des opérations suivantes par le dispositif utilisateur :

recevoir, par le dispositif utilisateur en provenance de l'entité de contrôle, un seuil d'asymétrie de retard de propagation ;

comparer la métrique d'asymétrie de retard de propagation au seuil d'asymétrie de retard de propagation ;

sur la base de la comparaison, déterminer si la première liaison sans fil du dispositif utilisateur a ou non un retard de propagation asymétrique ou non.

5. Appareil comprenant des moyens pour réaliser le procédé selon l'une des revendications 1 à 4.

6. Produit de programme informatique pouvant être utilisé, lorsqu'il est exécuté sur un ordinateur, pour réaliser le procédé selon l'une des revendications 1 à 4.

Example Wireless Network 130

FIG. 1

Determining, by a control entity, a plurality of signal measurements including at least one of a round-trip time (RTT) measurement and a time difference of arrival (TDoA) measurement for one or more wireless links for a user device, including at least for a first wireless link for the user device

210

Determining, by the control entity, whether or not the first wireless link of the user device has an asymmetric propagation delay based on the plurality of signal measurements

220

Performing, by the control entity, if the first wireless link of the user device has an asymmetric propagation delay, at least one action in response to the determined propagation delay asymmetry of the first wireless link

230

# FIG. 2

Determining, by a user device, a plurality of signal measurements including at least one of a round-trip time (RTT) measurement and a time difference of arrival (TDoA) measurement for one or more wireless links for the user device, including at least for a first wireless link for the user device ⟋ 310

Determining, by the user device, based on the plurality of signal measurements, a propagation delay asymmetry metric that estimates an amount of asymmetry between an uplink propagation delay and a downlink propagation delay for the first wireless link of the user device ⟋ 320

Performing, by the user device, at least one of the following:
Sending a message to a control entity to report the propagation delay asymmetry metric for the first wireless link of the user device; or
Determining, by the user device, whether or not the first wireless link of the user device has an asymmetric propagation delay based on the propagation delay asymmetry metric for the first wireless link of the user device ⟋ 330

# FIG. 3

**FIG. 4**

**FIG. 5**

**FIG. 6**

**FIG. 7**

414
LMF

gNB0

810

410
UE

gNB1

Rx-Tx

Rx-Tx

TDoA

812
Rx-Tx

Calculate RTT0 and
RTT1 and TDoA

814

Compute PD asymmetry metric:
A=2*TDoA-(RTT0-RTT1)

If A>T: Perform Action
816

# FIG. 8

414
LMF

gNB0

410
UE

gNB1

910

PD Asymmetry is
considered likely

912

· · ·

Determine beam
combination possibilities

914

Determine cell
combination possibilities

Determine PD test strategy

916

918

New beam selection

920

Reinitiate test/request reports from multiple beam-pairs

# FIG. 9

RF (or wireless) Transceiver 1200A

Processor (e.g., baseband processor) 1204

RF (or wireless) Transceiver 1202B

Controller 1208

Memory 1206

1200

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1802014 A1